# EUROPÄISCHE PATENTSCHRIFT

(11) **EP 2 736 741 B1**
(45) Veröffentlichungstag und Bekanntmachung des Hinweises auf die Patenterteilung: **06.09.2017**
(21) Anmeldenummer: 12753659.7
(22) Anmeldetag: 18.07.2012
(51) Int. Cl.: F25B 29/00, B60H 1/00, B60H 1/03, B60H 1/14, B60H 1/22, B60H 1/32

(54) **KLIMATISIERUNG ZUM TEMPERIEREN VON KOMPONENTEN SOWIE EINES INNENRAUMS EINES KRAFTFAHRZEUGS**
AIR CONDITIONING SYSTEM FOR CONTROLLING THE TEMPERATURE OF COMPONENTS AND OF AN INTERIOR OF A MOTOR VEHICLE
CLIMATISATION DESTINÉE À THERMORÉGULER DES COMPOSANTS ET L'HABITACLE D'UN VÉHICULE AUTOMOBILE

(30) Priorität: 28.07.2011 DE 102011108729
(43) Veröffentlichungstag der Anmeldung: 04.06.2014
(73) Patentinhaber: Volkswagen Aktiengesellschaft, 38440 Wolfsburg (DE)
(72) Erfinder: HOMANN, Gregor, 38440 Wolfsburg (DE); FÜRLL, Matthias, 38162 Weddel (DE); SCHMITT, Stefan, 38458 Velpke (DE)
(86) Internationale Anmeldenummer: PCT/EP2012/003026
(87) Internationale Veröffentlichungsnummer: WO 2013/013790

(56) Entgegenhaltungen:
- EP-A1- 1 961 592
- EP-A1- 2 327 575
- FR-A1- 2 913 217

## Beschreibung

Die Erfindung betrifft eine Vorrichtung und ein Verfahren zum Klimatisieren eines Innenraums sowie Temperieren von Komponenten eines Kraftfahrzeugs sowie ein verfahrensgemäßes und vorrichtungsgemäßes Kraftfahrzeug, wie in den untenstehenden Ansprüchen näher definiert. Das Klimatisieren und Temperieren von Komponenten eines Innenraums eines Kraftfahrzeugs ist bekannt. Dazu können mit einem Kühlmedium betriebene Kühlmittelkreise und mit einem Kältemittel betriebene Kältemittelkreise verwendet werden. Bei dem Kühlmittel kann es sich insbesondere um Wasser oder ein Gemisch aus Frostschutzmittel und Wasser handeln. Bei dem Kältemittel kann es sich um ein verdampfendes Medium zum Betreiben des Kältemittelkreises mit einer Hochdruckseite und einer Niederdruckseite handeln. Dabei ist es bekannt, den Kältemittelkreis in einem Wärmepumpenbetrieb zum Aufheizen von Komponenten und/oder eines Innenraums des Kraftfahrzeugs mit zu verwenden. Bei den Komponenten des Kraftfahrzeugs kann es sich insbesondere um Komponenten einer Elektrotraktion und einer elektrischen Energiequelle zum Betreiben der Elektrotraktion des Kraftfahrzeuges handeln. Aus der nicht veröffentlichten Anmeldung derselben Anmelderin mit dem Aktenzeichen DE 10 2010 044 416 ist eine Klimaanlage für ein Fahrzeug bekannt mit einem von einem Kältemittel durchströmbaren, als Wärmepumpen- und Kälteanlagenkreislauf ausgebildeten Kältemittelkreislauf und, diesen zugeordnet, einem Kompressor, zumindest einem Außenwärmeübertrager und zumindest einem Innenwärmeübertrager, dem ein Innenheizkondensator zugeordnet ist, und mit einer Vorrichtung zur Erzeugung eines mit dem Innenwärmeübertrager und dem Innenheizkondensator thermisch koppelbaren Luftstroms, sowie einer Dosierungsvorrichtung, mittels der eine Durchströmung des Innenheizkondensators mit zumindest einem Teilstrom des thermisch gekoppelten Luftstroms dosierbar ist. Dabei ist vorgesehen, dass in einem Wärmepumpenbetrieb das Kältemittel von der Hochdruckseite des Kompressors in den Innenheizkondensator förderbar ist oder gefördert wird, vom Innenheizkondensator durch ein Expansionsventil zum Innenwärmeübertrager förderbar ist oder gefördert wird, vom Innenwärmeübertrager durch ein beidseitig durchströmbares Expansionsventil zum Außenwärmeübertrager förderbar ist oder gefördert wird, vom Außenwärmeübertrager von der Niederdruckseite des Kompressors förderbar ist oder gefördert wird und in einem Kälteanlagenbetrieb das Kältemittel von der Hochdruckseite des Kompressors direkt in den Innenheizkondensator förderbar ist oder gefördert wird, vom Innenheizkondensator unter Umgehung des Expansionsventils zum Außenwärmeübertrager förderbar ist oder gefördert wird, vom Außenwärmeübertrager durch das beidseitig durchströmbare Expansionsventil zum Innenwärmeübertrager, vom Innenwärmeübertrager zur Niederdruckseite des Kompressors förderbar ist.

Die DE 10 2005 048 241 A1 offenbart eine Fahrzeugklimaanlage mit einem thermodynamischen Primärkreislauf, der einen über eine Schalteinrichtung gesteuerten Verdichter umfasst, und mit einem dem Primärkreislauf thermodynamisch koppelbaren Sekundärkühlkreislauf zur Kühlung von Elektroaggregaten, zum Beispiel einer Batterie, der zumindest ein auf ein Signal der Schalteinrichtung des Primärkreises ansprechendes Bauteil enthält. Die US 2003 0182961 A1 betrifft eine Klimaanlage für ein Abteil. Die Klimaanlage weist einen Kompressor, einen externen Wärmetauscher und einen internen Wärmetauscher auf. Außerdem weist die Klimaanlage einen Kühlwärmetauscher und eine dem Kühlwärmetauscher vorgeschaltete Dekompressionsvorrichtung auf, die in einem Kühlbetrieb geöffnet ist. Die DE 103 01 006 A1 betrifft einen Heiz-/Kühlkreislauf für ein Kraftfahrzeug mit einem Verdampfer zur Abkühlung von einem Innenraum zuzuführender Luft, einem Heizwärmetauscher zur Aufheizung der dem Innenraum zuzuführenden Luft, einem Außenwärmetauscher mit einem Kompressor zum Fördern von Kältemittel, einem ersten Expansionsorgan, das dem Verdampfer zugeordnet ist, einem zweiten Expansionsorgan, das dem Außenwärmetauscher zugeordnet ist und Kältemittelleitungen, über welche die vorgenannten Komponenten miteinander verbunden sind, wobei eine Abtauschaltung des Kreislaufes den Kompressor, den Außenwärmetauscher und das zweite Expansionsorgan umfasst.

Ferner offenbart die FR 2 913 217 A1 ein System und ein Verfahren für das Energiemanagement eines Kraftfahrzeuges, wobei zur Klimatisierung des Innenraums ein reversibel betreibbarer Kühlkreislauf vorgesehen ist. Über eine Umschalteinrichtung kann der Kühlkreislauf wahlweise in einem Wärmepumpenbetrieb oder einem Kühlbetrieb betrieben werden. Im Wärmepumpenbetrieb ist es insbesondere möglich Wärmeenergie, der in die Verbrennungskraftmaschine zurückgeleiteten Abgase über einen Wärmetauscher in den Kühlkreislauf abzugeben beziehungsweise zur Energierückgewinnung zu nutzen.

Aufgabe der Erfindung ist es, ein Klimatisieren und Temperieren von Komponenten und eines Innenraums eines Kraftfahrzeug so zu ermöglichen, dass mit möglichst wenig Wärmetauschern eine möglichst große Zahl an Temperatur- und Betriebszuständen des Kraftfahrzeugs abgedeckt werden können.

Die Aufgabe ist durch eine Klimatisierung zum Temperieren von Komponenten und eines Innenraums eines Kraftfahrzeugs, mit einer ersten Wasserpumpe zum Antreiben eines ersten Kühlmittelkreises, einer zweiten Wasserpumpe zum Antreiben eines zweiten Kühlmittelkreises, einem Kompressor zum Antreiben eines eine Hochdruckseite und eine Niederdruckseite aufweisenden Kältemittelkreises, einem wasserseitig in den ersten Kühlmittelkreis geschalteten und dem Innenraum luftseitig vorgeschalteten Luft-Wasser-Wärmetauscher, einem kältemittelseitig in den Kältemittelkreis geschalteten und dem Luft-Wasser-Wärmetauscher wasserseitig vorgeschalteten ersten Kältemittel-Kühlmittel-Wärmetauscher gelöst. Vorteilhaft kann Wärme von dem Kältemittel-Kühlmittel-Wärmetauscher von dem Kältemittelkreis auf den ersten Kühlmittelkreis übertragen werden. Vorteilhaft ist der erste Kühlmittelkreis in einem Klimagerät der Klimatisierung angeordnet und dient zum Erwärmen und/oder Kühlen von in den Innenraum des Kraftfahrzeugs eingeblasener Luft. Vorteilhaft ist der erste Kältemittel-Kühlmittel-Wärmetauscher außerhalb des Klimageräts angeordnet, so dass dieses abgesehen von dem dort vorgesehenen Luft-Wasser-Wärmetauscher wärmequellenfrei ist. Vorteilhaft erfolgt eine Erwärmung der in den Innenraum eingeblasenen Luft innerhalb des Klimageräts wahlweise nur über den Luft-Wasser-Wärmetauscher des ersten Kühlmittelkreises. Falls der Luft-Wasser-Wärmetauscher nicht mit Wärme versorgt wird, ist das Klimagerät vorteilhaft wärmequellenfrei. Vorteilhaft kann dadurch eine effiziente Erwärmung des Innenraums und/oder Kühlung des Innenraums ermöglicht werden.

Es ist vorgesehen, dass die Klimatisierung einen wasserseitig in den zweiten Kühlmittelkreis und kältemittelseitig in die Niederdruckseite des Kältemittelkreises geschalteten zweiten Kältemittel-Kühlmittel-Wärmetauscher aufweist. Vorteilhaft kann mittels des zweiten Kältemittel-Kühlmittel-Wärmetauschers Wärme von dem Kältemittelkreis auf den zweiten Kühlmittelkreis übertragen werden. Alternativ und/oder zusätzlich ist es denkbar, dass der zweite Kühlmittelkreis eine Wärmequelle aufweist, so dass diese Wärme mittels des zweiten Kältemittel-Kühlmittel-Wärmetauschers auf den Kältemittelkreis übertragbar ist.

Bei einem Ausführungsbeispiel der Klimatisierung ist vorgesehen, dass der erste Kältemittel-Kühlmittel-Wärmetauscher in die Hochdruckseite des Kältemittelkreises geschaltet ist. Vorteilhaft kann die in der Hochdruckseite des Kältemittelkreises geführte Wärme über den ersten Kältemittel-Kühlmittel-Wärmetauscher abgeführt werden.

Bei einem weiteren Ausführungsbeispiel der Klimatisierung ist vorgesehen, dass die Klimatisierung eine Ventilanordnung aufweist, mittels der der erste Kältemittel-Kühlmittel-Wärmetauscher kältemittelseitig aus dem Kältemittelkreis heraus schaltbar ist. Vorteilhaft kann mittels der Ventilanordnung eine Steuerung der Klimatisierung erfolgen. Insbesondere kann die Ventilanordnung mit einer zentralen Steuerung angesteuert werden, die insbesondere auch Mess- und Sensorsignale aufnimmt und in Steuersignale zum Ansteuern der Ventilanordnung umsetzt. Vorteilhaft kann mittels der Ventilanordnung der erste Kältemittel-Kühlmittel-Wärmetauscher kältemittelseitig aus dem Kältemittelkreis herausgeschaltet werden, so dass dieser keine Wärme von dem Kältemittelkreis zugeführt bekommt, also ohne nennenswerte Wärmeübertragung von dem ersten Kühlmittelkreis durchströmt werden kann.

Bei einem weiteren Ausführungsbeispiel der Klimatisierung ist vorgesehen, dass dem Luft-Wasser-Wärmetauscher luftseitig eine Luftklappe zum Steuern eines über den Luft-Wasser-Wärmetauscher in den Innenraum strömenden Luftstroms vorgeschaltet ist. Vorteilhaft kann mittels der Luftklappe ein Wärme- und/oder Kälteübergang zwischen dem Luftstrom und dem Luft-Wasser-Wärmetauscher unterbunden werden. Dabei ist es möglich, dass der gesamte Luftstrom durch den Luft-Wasser-Wärmetauscher strömt, wobei durch ein Schließen der Luftklappe dieser komplett zum Erliegen kommt. Alternativ und/oder zusätzlich kann zumindest ein Teil des Luftstroms an dem Luft-Wasser-Wärmetauscher vorbeigeführt werden, so dass ein Schließen der Luftklappe ein luftseitiges Herausschalten des Luft-Wasser-Wärmetauschers aus dem Luftstrom bedeutet. Alternativ und/oder zusätzlich kann mittels der Luftklappe auch nur ein Teil des Luft-Wasser-Wärmetauschers aus dem Luftstrom herausgeschaltet werden, so dass der Wärme- und/oder Kälteübergang damit steuerbar, insbesondere reduzierbar ist.

Bei einem weiteren Ausführungsbeispiel der Klimatisierung ist vorgesehen, dass mittels der Ventilanordnung eine Wärmequelle des Kraftfahrzeugs in den ersten Kühlmittelkreis hineinschaltbar und damit dem ersten Kältemittel-Kühlmittel-Wärmetauscher vorschaltbar ist. Vorteilhaft kann der erste Kühlmittelkreis neben der Aufgabe der Wärmeübertragung von dem ersten Kältemittel-Kühlmittel-Wärmetauscher auf den Luft-Wasser-Wärmetauscher des Klimageräts noch eine Temperierung, insbesondere Kühlung und/oder Erwärmung der zusätzlich hineinschaltbaren Wärmequellen übernehmen.

Bei einem weiteren Ausführungsbeispiel der Klimatisierung ist vorgesehen, dass die Wärmequellen des Kraftfahrzeugs zumindest ein Element der Gruppe: eine Elektrokomponente, eine Elektrotraktionskomponente, eine Leistungselektronik, eine Batterie, einen Verbrennungsmotor, einen Elektrozuheizer aufweist. Vorteilhaft können unterschiedlichste Komponenten des Kraftfahrzeugs temperiert, also gewärmt und/oder gekühlt werden. Insbesondere kann deren Abwärme zum Aufheizen des Innenraums verwendet werden, z.B. über die Kopplung mit dem Kältemittel-Kühlmittel-Wärmetauscher. Außerdem kann mittels des Kühlkreises erzeugte Kälte und/oder Wärme zum Kühlen und/oder Wärmen der unterschiedlichsten Elektrokomponenten verwendet werden.

Bei einem weiteren Ausführungsbeispiel der Klimatisierung ist vorgesehen, dass die Klimatisierung einen kältemittelseitig in eine Niederdruckseite des Kühlmittelkreises geschalteten und dem Luft-Wasser-Wärmetauscher luftseitig vorgeschalteten Verdampfer aufweist. Vorteilhaft kann mittels des Verdampfers der in den Innenraum strömende Luftstrom gekühlt werden. Entsprechend kann dadurch dem Kältemittelkreis Wärme zugeführt werden.

Bei einem weiteren Ausführungsbeispiel der Klimatisierung ist vorgesehen, dass der Kältemittelkreis einen von einem Umgebungsluftstrom durchströmten Kondensator aufweist, der mittels der Ventilanordnung wahlweise in die Hochdruckseite oder in die Niederdruckseite des Kältemittelkreises schaltbar ist. Vorteilhaft kann der Kondensator mittels der Ansteuerung der Ventilanordnung zum Zuführen oder alternativ zum Abführen von Wärme aus dem Kältemittelkreis verwendet werden. Dies kann insbesondere in einem Wärmepumpenbetrieb vorteilhaft ausgenutzt werden, da über den mittels der Ventilanordnung umschaltbaren Kondensator und den Verdampfer im Umluftbetrieb eine vergrößerte Wärmeaustauschfläche zur Verfügung steht.

Bei einem weiteren Ausführungsbeispiel der Klimatisierung ist vorgesehen, dass die Klimatisierung einen von einer dritten Wasserpumpe angetriebenen dritten Kühlmittelkreis zum separaten Kühlen des Verbrennungsmotors aufweist. Vorteilhaft kann der Verbrennungsmotor mittels des dritten Kühlmittelkreises gegebenenfalls separat gekühlt werden, beispielsweise falls dieser eine hohe Wärmeleistung erzeugt, die über die übrigen Kreise nicht abführbar bzw. nutzbar ist.

Die Aufgabe ist außerdem gelöst durch ein Verfahren zum Klimatisieren eines eine Elektrotraktion aufweisenden Kraftfahrzeugs mittels einer vorab beschriebenen Klimatisierung, mit Transportieren eines Wärmestroms von dem ersten Kältemittel-Kühlmittel-Wärmetauscher in den Luft-Wasser-Wärmetauscher in einem Heizbetrieb der Klimatisierung, wobei der Wärmestrom, gesteuert durch die Ventilanordnung, von zumindest einer der folgenden Komponenten des Kraftfahrzeugs stammt: der Wärmequelle des Kraftfahrzeugs, der Elektrokomponente, der Elektrotraktionskomponente, der Leistungselektronik, der Batterie, dem Verbrennungsmotor, und/oder der Hochdruckseite des Kühlmittelkreises; und mit Transportieren eines Kältestroms in einem Komponentenkühlbetrieb von dem zweiten Kältemittel-Kühlmittel-Wärmetauscher auf zumindest eine der folgenden Komponenten des Kraftfahrzeugs: die Wärmequelle, die Batterie, den Verbrennungsmotor, und/oder den Elektrozuheizer. Vorteilhaft kann in dem Heizbetrieb der Innenraum des Kraftfahrzeugs aufgeheizt werden, wobei der eigentliche Wärmetausch zum Zuführen des Wärmestroms mittels des ersten Kältemittel-Kühlmittel-Wärmetauschers in den Luft-Wasser-Wärmetauscher über eine Zuleitung erfolgt, so dass vorteilhaft das Klimagerät wärmequellenfrei ist, also der erste Kältemittel-Kühlmittel-Wärmetauscher außerhalb des Klimageräts angeordnet ist. Vorteilhaft kann die Wärme in einem Wärmepumpenbetrieb des Kältemittelkreises an dem ersten Kühlmittelkreis des Heizungswärmetauschers erzeugt und mittels des Luftstroms in den Innenraum transportiert werden. Vorteilhaft kann in dem Komponentenkühlbetrieb mittels des Kühlmittelkreises erzeugbare Kälte zum Kühlen der Komponenten des Kraftfahrzeugs verwendet werden. Alternativ und/oder zusätzlich können der Heizbetrieb und der Komponentenkühlbetrieb unabhängig voneinander gesteuert werden, so dass ein reiner Komponentenkühlbetrieb, ein reiner Heizbetrieb und ein kombinierter Heiz- und Komponentenkühlbetrieb mittels der Ventilanordnung vorteilhaft steuerbar sind.

Bei einer Ausführungsform des Verfahrens ist ein Transportieren eines Kältestroms in einem Innenraumkühlbetrieb oder einem Innenraumreheatbetrieb von dem Verdampfer in den Innenraum des Kraftfahrzeugs vorgesehen. Unter einem Innenraumkühlbetrieb kann verstanden werden, dass der Innenraum des Kraftfahrzeugs mittels des Luftstroms gekühlt wird. Unter einem Heizbetrieb kann verstanden werden, dass der Innenraum des Kraftfahrzeugs mittels des Luftstroms geheizt wird. Unter einem Innenraumreheatbetrieb kann verstanden werden, dass der in den Innenraum eingeblasene Luftstrom entfeuchtet wird. Dabei kann gegebenenfalls wahlweise eine Kühlung und/oder eine Erwärmung des Innenraums stattfinden, da dazu der in den Innenraum eingeblasene Luftstrom zunächst gekühlt und damit entfeuchtet und anschließend wieder erwärmt wird. Je nach Steuerung der Wärme- und Kälteströme kann so ein gekühlter oder erwärmter und getrockneter Luftstrom in den in Innenraum eingeblasen werden.

Die Aufgabe ist außerdem gelöst bei einem Kraftfahrzeug, das ausgelegt, eingerichtet, konstruiert und/oder ausgestattet ist mit einer Software zum Durchführen eines vorab beschriebenen Verfahrens und/oder ausgerüstet ist mit einer vorab beschriebenen Klimatisierung. Es ergeben sich die vorab beschriebenen Vorteile.

Weitere Vorteile, Merkmale und Einzelheiten ergeben sich aus der nachfolgenden Beschreibung, in der unter Bezug auf die Zeichnung ein Ausführungsbeispiel im Einzelnen beschrieben ist. Gleiche, ähnliche und/oder funktionsgleiche Teile sind mit gleichen Bezugszeichen versehen.

Es zeigen:
- Figur 1: eine schematische Ansicht einer Klimatisierung zum Temperieren von Komponenten und eines Innenraums eines Kraftfahrzeugs, wobei die Klimatisierung einen elektrischen Zuheizer aufweist;
- Figur 2: eine schematische Ansicht einer weiteren Klimatisierung analog der in Fig. 1 gezeigten Klimatisierung, wobei im Unterschied anstatt des Zuheizers ein Verbrennungsmotor vorgesehen ist;
- Figur 3: eine schematische Übersicht verschiedener Betriebsweisen der in Figur 1 gezeigten Klimatisierung; und
- Figur 4: eine schematische Übersicht verschiedener Betriebsweisen der in Figur 2 gezeigten Klimatisierung.

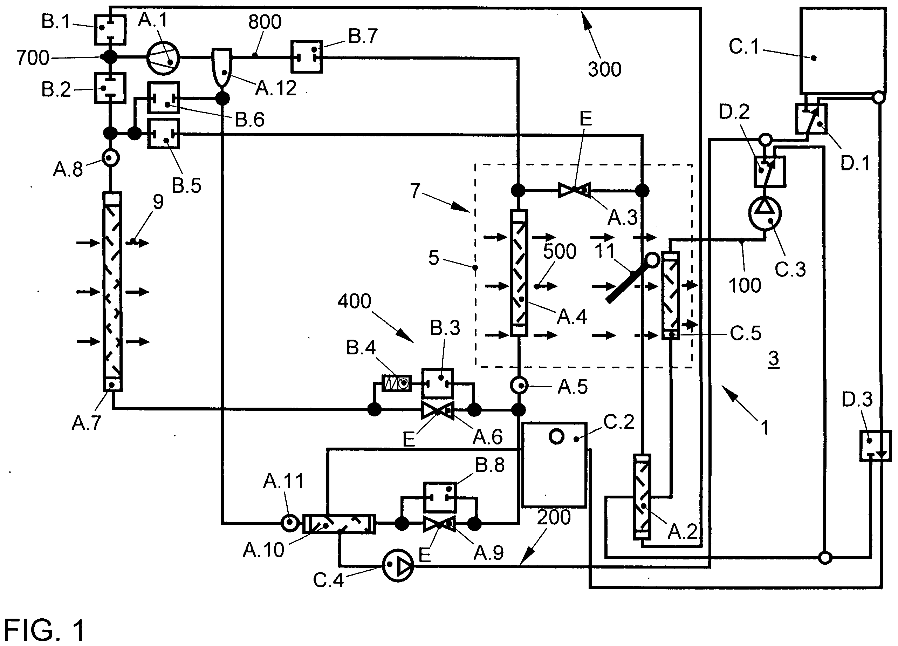

Figur 1 zeigt eine Klimatisierung 7 zum Klimatisieren eines Innenraums 3 eines Kraftfahrzeugs 1 mittels eines Klimageräts 5.

Die in Figur 1 gezeigte Klimatisierung 7 weist einen ersten Kühlmittelkreis 100 auf, der von einer ersten Wasserpumpe C.3 angetrieben wird beziehungsweise antreibbar ist.

Außerdem weist die Klimatisierung 7 einen zweiten Kühlmittelkreis 200 auf, der von einer zweiten Wasserpumpe C.4 angetrieben wird beziehungsweise antreibbar ist.

Darüber hinaus weist die Klimatisierung 7 einen Kältemittelkreis 300 auf, der von einem Kompressor A.1 angetrieben wird beziehungsweise antreibbar ist. Der Kältemittelkreis 300 wird mit einem Kältemittel betrieben und kann in einem Klimaanlagenbetrieb und einem Wärmepumpenbetrieb wirken.

Die Kühlmittelkreise 100 und 200 werden mit einem Kühlmittel betrieben, beispielsweise einem Kühlwasser, insbesondere einem Kühlwasser-Frostschutzmittel-Gemisch. Zum Steuern und/oder Regeln der Klimatisierung 7 weist das Kraftfahrzeug 1 eine nicht näher dargestellte Steuereinheit, beispielsweise ein Klimasteuergerät und/oder ein zentrales Steuergerät auf. Das Steuergerät steuert eine Ventilanordnung 400, die auf die Kreise 100, 200 und 300 wirkt. Zum Generieren entsprechender Steuer- und/oder Regelsignale empfängt das nicht näher dargestellte Steuergerät Messsignale von Druck-Temperatursensoren, nämlich von einem ersten Druck-Temperatursensor A.5, einem zweiten Druck-Temperatursensor A.8 und einem dritten Druck-Temperatursensor A.11.

In Abhängigkeit der Signale der Druck-Temperatursensoren A.5, A.8 und A.11 werden insbesondere elektrische Expansionsventile, nämlich ein erstes elektrisches Expansionsventil A.3, ein zweites elektrisches Expansionsventil A.6 und ein drittes elektrisches Expansionsventil A.9 des Kältemittelkreises 300 gesteuert. Den elektrischen Expansionsventilen A.3, A.6 und A.9 sind jeweils Wärmetauscher nachgeschaltet, die als Verdampfer ausgelegt sind beziehungsweise als Verdampfer betreibbar sind, nämlich ein Verdampfer A.4, ein Kondensator A.7 sowie ein zweiter Kältemittel-Kühlmittel-Wärmetauscher A.10.

Außerdem weist der erste Kühlmittelkreis 100 und der Kältemittelkreis 300 einen ersten Kältemittel-Kühlmittel-Wärmetauscher A.2 auf, der kältemittelseitig dem ersten elektrischen Expansionsventil A.3 und kühlmittelseitig einem Luft-Wasser-Wärmetauscher C.5 des Klimageräts 5 vorgeschaltet ist.

Dem Kompressor A.1 vorgeschaltet, weist der Kältemittelkreis 300 einen Sammler A.12 auf.

Die Ventilanordnung 400 weist in die Kreise 100 - 300 geschaltete 2/2-Wegeventile und 3/2-Wegeventile auf. Im Einzelnen handelt es sich dabei um ein erstes 2/2-Wegeventil B.1, ein zweites 2/2-Wegeventil B.2, ein drittes 2/2-Wegeventil B.3, ein viertes 2/2-Wegeventil B.5, ein fünftes 2/2-Wegeventil B.6, ein sechstes 2/2-Wegeventil B.7 und ein siebtes 2/2-Wegeventil B.8, ein erstes 3/2-Wegeventil D.1, ein zweites 3/2-Wegeventil D.2 und ein drittes 3/2-Wegeventil D.3. Außerdem weist die Ventilanordnung 400 ein dem dritten 2/2-Wegeventil B. 3 nachgeschaltetes Rückschlagventil B. 4, das in Richtung des dritten 2/2-Wegeventils B.3 sperrt.

Das in Figur 1 dargestellte Kraftfahrzeug 1 weist eine nicht näher dargestellte Elektrotraktion auf, die mittels einer Batterie C.1 mit elektrischer Energie versorgbar ist. Die Batterie C.1 ist in den zweiten Kühlmittelkreis 200 mittels der Ventilanordnung schaltbar, nämlich um diese zu kühlen oder zu wärmen.

Falls die Batterie gewärmt werden muss, weist das Kraftfahrzeug 1 eine Wärmequelle auf, vorliegend einen Elektrozuheizer C.2, der in den zweiten Kühlmittelkreis 200 Wärme einspeisen kann. Aber auch über den Wärmeeintrag über den Kältekreislauf 300 über den Kältemittel-Kühlmittel-Wärmetauscher A.2 in den Kühlmittelkreislauf 100 kann die Batterie gewärmt werden.

Im Folgenden werden unterschiedliche Betriebszustände beziehungsweise Betriebsarten der in Figur 1 gezeigten Klimatisierung beschrieben. Diese werden jeweils durch einen Schaltzustand der Ventilanordnung 400 bedingt, wobei sich die Kreise 100, 200, 300 der Klimatisierung 7 entsprechend verändern. Zum Beschreiben der Betriebszustände beziehungsweise Betriebsarten werden im Folgenden jeweils beginnend von der Antriebsquelle, also dem Kompressor A.1 und den Wasserpumpen C.3 und C.4 stromabwärts die Einzelkomponenten aufgezählt. Aus dieser Aufzählung geht auch ein jeweiliger Schaltzustand der 3/2-Wegeventile hervor. Entsprechend nicht genannte 2/2-Wegeventile, die vorliegend als Schaltventile ausgeführt sind, sind in dem jeweils beschriebenen Schaltzustand geschlossen.

Bei einer ersten Ausprägung verläuft der erste Kühlmittelkreis 100 von der ersten Wasserpumpe C.3 zu dem zweiten 3/2-Wegeventil D.2, über den ersten Kältemittel-Kühlmittel-Wärmetauscher A.2 und den Luft-Wasser-Wärmetauscher C.5 wieder zurück zur ersten Wasserpumpe C.3.

Der zweite Kühlmittelkreis 200 verläuft von der zweiten Wasserpumpe C.4 zu dem ersten 3/2-Wegeventil D.1, über das dritte 2/2-Wegeventil D.3, über den Elektrozuheizer C.2 und über den zweiten Kältemittel-Kühlmittel-Wärmetauscher A.10 wieder zurück zu der zweiten Wasserpumpe C.4.

Der Kältemittelkreis 300 verläuft von dem Kompressor A.1 über das erste 2/2-Wegeventil B.1, den ersten Kältemittel-Kühlmittel-Wärmetauscher A.2, das dritte elektrische Expansionsventil A.3, den Verdampfer A.4, den ersten Druck-Temperatursensor A.5, das siebte 2/2-Wegeventil B.8, den zweiten Kältemittel-Kühlmittel-Wärmetauscher A.10, den dritten Druck-Temperatursensor A.11 und über den Sammler A.12 wieder zurück zu dem Kompressor A.1.

Das siebte 2/2-Wegeventil B.8 ist zu dem dritten elektrischen Expansionsventil A.9 parallel geschaltet, wobei in der ersten Ausprägung der ersten Betriebsart das siebte 2/2-Wegeventil B.8 geöffnet ist.

Die erste Betriebsart in der ersten Ausprägung kann dazu verwendet werden, den Innenraum 7 des Kraftfahrzeugs 1 zu beheizen, insbesondere bei Temperaturen in einer Umgebung des Kraftfahrzeugs 1 von unter -10°C. Als Wärmequelle dient dabei der Elektrozuheizer C.2. In einer zweiten Ausprägung der ersten Betriebsart, die ebenfalls zum Heizen des Innenraums 7 dient, kann aus einem aus der Umgebung stammenden Umgebungsluftstrom 9 mittels des Kondensators A.7 dem Kältemittelkreis 300 Wärme zugeführt werden, so dass dieser in einem Wärmepumpenbetrieb zusätzlich als Wärmequelle genutzt werden kann. Im Unterschied verläuft der Kältemittelkreis 300 zusätzlich stromabwärts des ersten Druck-Temperatursensors A.5 über einen Parallelzweig, der über das dritte 2/2-Wegeventil B.3, das Rückschlagventil B.4, den Kondensator A.7, den zweiten Druck-Temperatursensor A.8, das fünfte 2/2-Wegeventil B.6 und schließlich ebenfalls über den Sammler A.12 zurück in den Kompressor A.1 verläuft. Vorteilhaft kann in dieser Betriebsart der Kondensator A.7 des Kältemittelkreises 300 als Verdampfer zum Aufnehmen von in der Umgebung des Kraftfahrzeugs 1 beziehungsweise in dem Umgebungsluftstrom 9 enthaltener Wärme dienen.

In einer ersten Ausprägung einer zweiten Betriebsart kann die Klimatisierung 7 zum Beheizen des Innenraums 3 bei Temperaturen bis -10°C betrieben werden. In der ersten Ausprägung der zweiten Betriebsart ist der erste Kühlmittelkreis 100 analog der ersten Betriebsart geschaltet. Der zweite Kühlmittelkreis 200 ist abgeschaltet, wobei die zweite Wasserpumpe C.4 keine Pumpleistung aufweist. Der Kältemittelkreis 300 verläuft von dem Kompressor A.1 über das erste 2/2-Wegeventil B.1, den ersten Kältemittel-Kühlmittel-Wärmetauscher A.2, das erste elektrische Expansionsventil A.3, den Verdampfer A.4, den ersten Druck-Temperatursensor A.5, das zweite elektrische Expansionsventil A.6 und das dritte 2/2-Wegeventil B.3 sowie das Rückschlagventil B.4, den als Verdampfer betriebenen Kondensator A.7, den zweiten Druck-Temperatursensor A.8, das fünfte 2/2-Wegeventil B.6 und schließlich über den Sammler A.12 zurück zu dem Kompressor A.1.

In einer zweiten Ausprägung der zweiten Betriebsart ist ebenfalls der zweite Kühlmittelkreis 200 abgeschaltet.

In dieser zweiten Ausprägung der zweiten Betriebsart kann in einem Stillstand des Kraftfahrzeugs 1 die Batterie C.1 geheizt werden. Dies kann mittels des ersten Kühlmittelkreises 100 erfolgen, der dazu von der ersten Wasserpumpe C.3 über das zweite 3/2-Wegeventil D.2, das erste 3/2-Wegeventil D.1, die Batterie C.1, das dritte 3/2-Wegeventil D.3, den ersten Kältemittel-Kühlmittel-Wärmetauscher A.2 und schließlich über den Luft-Wasser-Wärmetauscher C.5 zurück zu der ersten Wasserpumpe C.3 verläuft.

Als Besonderheit der zweiten Ausprägung der zweiten Betriebsart ist eine luftseitig dem Luft-Wasser-Wärmetauscher C.5 vorgeschaltete Klappe 11 geschlossen. Die Klappe 11 ist in Figur 1 in einem teilweise geöffneten Zustand eingezeichnet.

Der Verdampfer A.4 und der Luft-Wasser-Wärmetauscher C.5 sind von einem in den Innenraum 3 strömenden Luftstrom 500 durchströmt. Der Luftstrom 500 dient zum Temperieren des Innenraums 3.

In der zweiten Ausprägung der zweiten Betriebsart ist jedoch dieser Luftstrom 500 mittels der Klappe 11 von dem Luft-Wasser-Wärmetauscher C.5 abgeschirmt.

In einer dritten Ausprägung der zweiten Betriebsart kann ein Kühlen der Batterie C.1 während eines Stillstands des Kraftfahrzeugs 1 mittels des Kühlmittelkreises 200 erfolgen.

Dabei verläuft der erste Kühlmittelkreis 100 von der ersten Wasserpumpe C.3 über das zweite 3/2-Wegeventil D.2, den ersten Kältemittel-Kühlmittel-Wärmetauscher A.2 und schließlich über den Luft-Wasser-Wärmetauscher C.5 zurück zur ersten Wasserpumpe C.3.

Der zweite Kühlmittelkreis 200 verläuft von der zweiten Wasserpumpe C.4 über das erste 3/2-Wegeventil D.1 über die Batterie C.1, über das dritte 3/2-Wegeventil D.3, den Elektrozuheizer C.2, den zweiten Kältemittel-Kühlmittel-Wärmetauscher A.10 und schließlich zurück zur zweiten Wasserpumpe C.4.

Der Kältemittelkreis 300 verläuft von dem Kompressor A.1 über das erste 2/2-Wegeventil B.1, den ersten Kältemittel-Kühlmittel-Wärmetauscher A.2, das erste elektrische Expansionsventil A.3, den Verdampfer A.4, den ersten Druck-Temperatursensor A.5, über einen ersten Parallelzweig über das dritte elektrische Expansionsventil A.9, das siebte 2/2-Wegeventil B.8, den zweiten Kältemittel-Kühlmittel-Wärmetauscher A.10, den dritten Druck-Temperatursensor A.11, einen zweiten Parallelzweig mit dem zweiten elektrischen Expansionsventil A.6, den Kondensator A.7, den zweiten Druck-Temperatursensor A.8, das fünften 2/2-Wegeventil B.6 und schließlich stromabwärts der Parallelzweige über den Sammler A.12 zurück in den Kompressor A.1.

In einer ersten Ausprägung einer dritten Betriebsart kann die Klimatisierung 7 zum Kühlen der Batterie in einem Klimaanlagenbetrieb und zum Entfeuchten des Innenraums 3 in einem ReHeatbetrieb verwendet werden. Dabei wird der Luftstrom 500 zunächst abgekühlt und dann wieder erwärmt, bevor er in den Innenraum 3 eingeblasen wird. Der erste Kühlmittelkreis 100 ist dabei gleich geschaltet wie beispielsweise in der ersten Ausprägung der ersten Betriebsart.

Der zweite Kühlmittelkreis 200 ist dabei gleich geschaltet wie beispielsweise in der dritten Ausprägung der zweiten Betriebsart.

Der Kältemittelkreis 300 verläuft von dem Kompressor A.1 über das erste 2/2-Wegeventil B.1, den ersten Kältemittel-Kühlmittel-Wärmetauscher A.2, das vierte 2/2-Wegeventil B.5, den zweiten Druck-Temperatursensor A.8, den als Kondensator betriebenen Kondensator A.7, das zweite elektrische Expansionsventil A.6 und von diesem stromabwärts parallel verzweigt in einem ersten Parallelzweig über den ersten Druck-Temperatursensor A.5, den Verdampfer A.4 und das sechste 2/2-Wegeventil B.7 und in einem zweiten Parallelzweig über das siebte 2/2-Wegeventil B.8, den zweiten Kältemittel-Kühlmittel-Wärmetauscher A.10 und den dritten Druck-Temperatursensor A.11 und schließlich wieder zusammengeführt über den Sammler A.12 zurück in den Kompressor A.1.

Eine erste Ausprägung einer vierten Betriebsart der Klimatisierung kann zum Kühlen der Batterie C.1 und des Innenraums 3 in einem Klimaanlagenbetrieb des Kältemittelkreises 300 verwendet werden. Dabei ist der erste Kühlmittelkreis 100 abgeschaltet, also die erste Wasserpumpe C.3 ohne Förderleistung. Der zweite Kühlmittelkreis 200 ist analog z.B. der dritten Ausprägung der zweiten Betriebsart geschaltet.

Der Kältemittelkreis 300 verläuft von dem Kompressor A.1 über das zweite 2/2-Wegeventil B.2, den zweiten Druck-Temperatursensor A.8, den Kondensator A.7, das zweite elektrische Expansionsventil A.6 und von dort parallel verzweigt in einem ersten Parallelzweig über den ersten Druck-Temperatursensor A.5, den Verdampfer A.4 und das sechste 2/2-Wegeventil B.7 und in einem zweiten Parallelzweig über das siebte 2/2-Wegeventil B.8, den zweiten Kältemittel-Kühlmittel-Wärmetauscher A.10 und den dritten Druck-Temperatursensor A.11 und schließlich wieder zusammengeführt über den Sammler A.12 zurück zum Kompressor A.1.

Als Besonderheit ist in der ersten Ausprägung der vierten Betriebsart die Klappe 11 geschlossen.

Eine zweite Ausprägung der vierten Betriebsart kann zum Kühlen der Batterie C.1 und des Innenraums 3 in einem ReHeatbetrieb, also mit einer Entfeuchtung des Luftstroms 500 verwendet werden.

Der erste Kühlmittelkreis 100 ist dabei analog z.B. der zweiten Ausprägung der zweiten Betriebsart geschaltet. Der zweite Kühlmittelkreis 200 ist abgeschaltet, also die zweite Wasserpumpe C.4 ohne Förderleistung.

Der Kältemittelkreis 300 ist analog der ersten Ausprägung der vierten Betriebsart geschaltet.

Der in Figur 1 gezeigte Kältemittelkreis 300 weist jeweils eine Hochdruckseite 700 und eine Niederdruckseite 800 auf, wobei sich die Niederdruckseite 800 stromabwärts des entsprechenden elektrischen Expansionsventils A.3, A.6 und A.9 ergibt. Die Hochdruckseite 700 liegt entsprechend stromabwärts des Kompressors A.1 und stromaufwärts des entsprechenden elektrischen Expansionsventils A.3, A.6 sowie A.9.

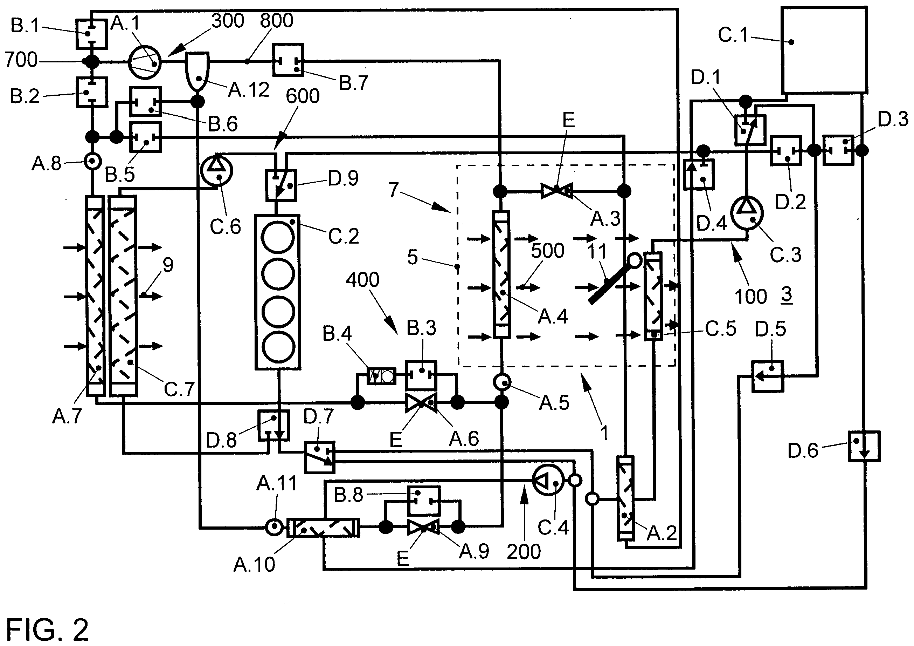

Figur 2 zeigt ein weiteres Ausführungsbeispiel einer Klimatisierung 7 eines Kraftfahrzeugs 1. Funktionsgleiche Bauteile sind mit gleichen Bezugszeichen versehen, soweit nicht explizit auf Unterschiede eingegangen wird. Außerdem wird im Folgenden lediglich auf die Schaltungsunterschiede zur Darstellung gemäß der Figur 1 eingegangen. Als Unterschied weist das Kraftfahrzeug 1 neben einer Elektrotraktion einen Verbrennungsmotor C.2 auf. Der Verbrennungsmotor C.2 kann als Wärmequelle genutzt werden und ist entsprechend der Verschaltung der Figur 2 anstelle des elektrischen Zuheizers vorgesehen. Als weitere Unterschiede sind mit den Bezugszeichen D.2 und D.3 ein erstes 2/2-Wegeventil D.2 und ein zweites 2/2-Wegeventil D.3 der Ventilanordnung 400 bezeichnet.

Als weiterer Unterschied weist die Klimatisierung 7 gemäß der Darstellung der Figur 2 einen dritten Kühlmittelkreis 600 auf, der von einer dritten Wasserpumpe 300 angetrieben ist beziehungsweise antreibbar ist. In dem dritten Kühlmittelkreis 600 ist ein von dem Umgebungsluftstrom 9 durchströmter beziehungsweise durchströmbarer Kühler C.7 geschaltet und/oder schaltbar.

Der Kühler C.7 ist luftseitig bezüglich des Umgebungsluftstroms 9 dem Kondensator A.7 nachgeschaltet.

Die in Figur 2 gezeigte Klimatisierung 7 kann in fünf verschiedenen Betriebsarten betrieben werden, die im Folgenden näher erläutert werden.

In einer ersten Ausprägung einer ersten Betriebsart, die für ein Heizen des Innenraums 3 bei Temperaturen unter -10°C verwendet werden kann, sind der zweite Kühlmittelkreis 200, der Kältemittelkreis 300 und der dritte Kühlmittelkreis 600 abgeschaltet, also die jeweiligen Antriebsquellen ohne Förderleistung.

Der erste Kühlmittelkreis 100 verläuft von der ersten Wasserpumpe C.3 über das erste 3/2-Wegeventil D.1, das vierte 3/2-Wegeventil D.8 und dem dritten das erste 2/2-Wegeventil D.2, das fünfte 3/2-Wegeventil D.9, den Verbrennungsmotor C.2, das dritte 3/2-Wegeventil D.7, den ersten Kältemittel-Kühlmittel-Wärmetauscher A.2 und schließlich über den Luft-Wasser-Wärmetauscher C.5 zurück zur ersten Wasserpumpe C.3. Vorteilhaft kann von dem Verbrennungsmotor C.2 erzeugte Wärme über den Luft-Wasser-Wärmetauscher C.5 in den in den Innenraum 3 strömenden Luftstrom 500 zur Erwärmung des Innenraums 3 überführt werden.

In einer zweiten Ausprägung der ersten Betriebsart kann zusätzlich zu dem Innenraum 3 noch die Batterie C.1 beheizt werden.

Dazu verläuft der erste Kühlmittelkreis 100 ausgehend von der ersten Wasserpumpe C.3 über das erste 3/2-Wegeventil D.1, die Batterie C.1, das zweite 2/2-Wegeventil D.3, das erste 2/2-Wegeventil D.2, das fünfte 3/2-Wegeventil D.9, den Verbrennungsmotor C.2, das vierte 3/2-Wegeventil D.8, das dritte 3/2-Wegeventil D.7, den ersten Kältemittel-Kühlmittel-Wärmetauscher A.2 und schließlich über den Luft-Wasser-Wärmetauscher C.5 zurück zur ersten Wasserpumpe C.3. Vorteilhaft kann mit der noch nach dem Luft-Wasser-Wärmetauscher C.5 vorhandenen Wärme die Batterie C.1 gewärmt werden.

In einer ersten Ausprägung einer zweiten Betriebsart kann der Innenraum 3 geheizt und die Batterie C.1 gekühlt werden, bei Temperaturen unter -10°C.

Der erste Kühlmittelkreis 100 ist dabei analog der ersten Ausprägung der ersten Betriebsart geschaltet. Der zweite Kühlmittelkreis 200 verläuft ausgehend von der zweiten Wasserpumpe C.4 über das vierte 3/2-Wegeventil D.8, den zweiten Kältemittel-Kühlmittel-Wärmetauscher A.10, das zweite 3/2-Wegeventil D.4, die Batterie C.1, das vierte 2/2-Wegeventil D.6 und schließlich zurück zur zweiten Wasserpumpe C.4. Der Kältemittelkreis 300 verläuft von dem Kompressor A.1 über das erste 2/2-Wegeventil B.1, den ersten Kältemittel-Kühlmittel-Wärmetauscher A.2, das erste elektrische Expansionsventil A.3, den Verdampfer A.4, den ersten Druck-Temperatursensor A.5 und von dort parallel verzweigt in einem ersten Parallelzweig über das zweite elektrische Expansionsventil A.6, den Kondensator A.7, den zweiten Druck-Temperatursensor A.8, das fünfte 2/2-Wegeventil B.6 und in einem zweiten Parallelzweig über das dritte elektrische Expansionsventil A.9, den zweiten Kältemittel-Kühlmittel-Wärmetauscher A.10, den dritten Druck-Temperatursensor A.11 und schließlich gemeinsam über den Sammler A.12 zurück zu dem Kompressor A.1.

In einer zweiten Ausprägung der zweiten Betriebsart, die ebenfalls zum Beheizen des Innenraums 3 bei Temperaturen unter -10°C geschaltet werden kann, verläuft der erste Kühlmittelkreis 100 ausgehend von der ersten Wasserpumpe C.3 über das erste 3/2-Wegeventil D.1, das dritte 2/2-Wegeventil D.5, den ersten Kältemittel-Kühlmittel-Wärmetauscher A.2 und den Luft-Wasser-Wärmetauscher C.5 zurück zur ersten Wasserpumpe C.3.

Der zweite Kühlmittelkreis 200 verläuft ausgehend von der zweiten Wasserpumpe C.4 über den zweiten Kältemittel-Kühlmittel-Wärmetauscher A.10, das zweite 3/2-Wegeventil D.4, das fünfte 3/2-Wegeventil D.9, den Verbrennungsmotor C.2, das vierte 3/2-Wegeventil D.8 und schließlich über das dritte 3/2-Wegeventil D.7 zurück zur zweiten Wasserpumpe C.4.

Der Kältemittelkreis 300 ist analog der ersten Ausprägung der zweiten Betriebsart geschaltet, mit geschlossenen 2/2-Wegeventilen B.3 und B.8 und über die Expansionsventile A.6 und A.9 in Parallelzweigen.

Eine dritte Ausprägung der zweiten Betriebsart kann für ein Beheizen des Innenraums 3 und ein Heizen der Batterie C.1 für Temperaturen unter -10°C verwendet werden.

Der erste Kühlmittelkreis 100 verläuft ausgehend von der ersten Wasserpumpe C.3 über das erste 3/2-Wegeventil D.1, die Batterie C.1, das zweite 2/2-Wegeventil D.3, das dritte 2/2-Wegeventil D.5, den ersten Kältemittel-Kühlmittel-Wärmetauscher A.2, den Luft-Wasser-Wärmetauscher C.5 zurück zur ersten Wasserpumpe C.3.

Der zweite Kühlmittelkreis 200 ist bei der dritten Ausprägung der zweiten Betriebsart analog der zweiten Ausprägung der zweiten Betriebsart geschaltet. Der Kältemittelkreis 300 ist bei der dritten Ausprägung der zweiten Betriebsart analog der ersten und zweiten Ausprägung der zweiten Betriebsart geschaltet. In den Betriebsarten 1 und 2 ist jeweils der dritte Kühlmittelkreis 500 antriebslos, also die dritte Wasserpumpe C.6 abgeschaltet.

Eine erste Ausprägung einer dritten Betriebsart kann für ein Heizen des Innenraums 3 und ein Heizen der Batterie C.1 verwendet werden.

Der erste Kühlmittelkreis 100 verläuft dabei ausgehend von der ersten Wasserpumpe C.3 über das erste 3/2-Wegeventil D.1, die Batterie C.1, das zweite 2/2-Wegeventil D.3, das dritte 2/2-Wegeventil D.5, den ersten Kältemittel-Kühlmittel-Wärmetauscher A.2 und schließlich über den Luft-Wasser-Wärmetauscher C.5 zurück zur ersten Wasserpumpe C.3. Der zweite Kühlmittelkreis 200 ist abgeschaltet. Ebenfalls ist der dritte Kühlmittelkreis 600 abgeschaltet.

Der Kältemittelkreis 300 verläuft ausgehend von dem Kompressor A.1 über das erste 2/2-Wegeventil B.1, den ersten Kältemittel-Kühlmittel-Wärmetauscher A.2, das erste elektrische Expansionsventil A.3, den Verdampfer A.4, den ersten Druck-Temperatursensor A.5, das zweite elektrische Expansionsventil A.6, den Kondensator A.7, den zweiten Druck-Temperatursensor A.8, das fünfte 2/2-Wegeventil B.6 und schließlich über den Sammler A.12 zurück zum Kompressor A.1.

Eine zweite Ausprägung der dritten Betriebsart kann zum Heizen des Innenraums 3 und zum Kühlen der Batterie C.1 für Temperaturen ebenfalls bis -10°C verwendet werden. Der erste Kühlmittelkreis 100 ist dabei geschaltet wie bei der zweiten Ausprägung der zweiten Betriebsart.

Der zweite Kühlmittelkreis 200 ist dabei analog der ersten Ausprägung der zweiten Betriebsart geschaltet.

Der Kältemittelkreis 300 ist dabei analog der ersten Ausprägung der zweiten Betriebsart geschaltet.

Eine erste Ausprägung einer vierten Betriebsart kann zum Kühlen des Innenraums 3 mit einer Entfeuchtung des Luftstroms 500 in einem ReHeatbetrieb verwendet werden. Der erste Kühlmittelkreis 100 ist dabei analog der zweiten Ausprägung der dritten Betriebsart geschaltet.

Der zweite Kühlmittelkreis 200 und der dritte Kühlmittelkreis 600 sind abgeschaltet.

Der Kältemittelkreis 300 verläuft ausgehend von dem Kompressor A.1 über das erste 2/2-Wegeventil B.1, den ersten Kältemittel-Kühlmittel-Wärmetauscher A.2, das vierte 2/2-Wegeventil B.5, den zweiten Druck-Temperatursensor A.8, den Kondensator A.7, das zweite elektrische Expansionsventil A.6, den ersten Druck-Temperatursensor A.5, den Verdampfer A.4, das sechste 2/2-Wegeventil B.7 und schließlich über den Sammler A.12 zurück zum Kompressor A.1.

In einer zweiten Ausprägung der vierten Betriebsart können der Innenraum 3 und die Batterie C.5 unter einer Luftentfeuchtung des Luftstroms 500 in einem ReHeatbetrieb gekühlt werden.

Dabei ist der erste Kühlmittelkreis 100 analog der ersten Ausprägung der vierten Betriebsart geschaltet.

Der zweite Kühlmittelkreis 200 ist analog der zweiten Ausprägung der dritten Betriebsart geschaltet.

Der Kältemittelkreis 300 verläuft ausgehend von dem Kompressor A.1 über das erste 2/2-Wegeventil B.1, den ersten Kältemittel-Kühlmittel-Wärmetauscher A.2, das vierte 2/2-Wegeventil B.5, den zweiten Druck-Temperatursensor A.8, den Kondensator A.7, das zweite elektrische Expansionsventil A.6 und von dort weiter parallel verzweigt in einem ersten Parallelzweig über den ersten Druck-Temperatursensor A.5, den Verdampfer A.4, das sechste 2/2-Wegeventil B.7 und in einem zweiten Parallelzweig über das siebte 2/2 Wegeventil B.8, den zweiten Kältemittel-Kühlmittel-Wärmetauscher A.10, den dritten Druck-Temperatursensor A.11 und von dort zusammengeführt über den Sammler A-12 wieder zurück zum Kompressor A.1.

Der dritte Kühlmittelkreis 600 ist abgeschaltet.

Eine erste Ausprägung einer fünften Betriebsart kann zum Kühlen des Innenraums 3 und zum Kühlen der Batterie C.1 verwendet werden, wobei über einen ReHeatbetrieb eine Entfeuchtung des Luftstroms 500 erfolgt. Der erste Kühlmittelkreis 100 ist dabei analog der ersten Ausprägung der dritten Betriebsart geschaltet. Der zweite Kühlmittelkreis 200 und der dritte Kühlmittelkreis 600 sind abgeschaltet. Der Kältemittelkreis 300 verläuft ausgehend von dem Kompressor A.1 über das zweite 2/2 Wegeventil B.2, über den zweiten Druck-Temperatursensor A.8, über den Kondensator A.7, über das zweite elektrische Expansionsventil A.6, über den ersten Druck-Temperatursensor A.5, über den Verdampfer A.4, über das sechste 2/2-Wegeventil B.7 und schließlich über den Sammler A.12 zurück zum Kompressor A.1.

In einer zweiten Ausprägung der fünften Betriebsart, die für ein Kühlen der Batterie C.1 und des Innenraums 3 verwendet werden kann, ist der erste Kühlmittelkreis 100 abgeschaltet.

Der zweite Kühlmittelkreis 200 ist analog der zweiten Ausprägung der vierten Betriebsart geschaltet.

Der Kältemittelkreis verläuft ausgehend von dem Kompressor A.1 über das zweite 2/2-Wegeventil B.2, den zweiten Druck-Temperatursensor A.8, den Kondensator A.7, das zweite elektrische Expansionsventil A.6, von dort parallel verzweigt über einen ersten Parallelzweig über den ersten Druck-Temperatursensor A.5, den Verdampfer A.4, das sechste 2/2-Wegeventil B.7 und in einem zweiten Parallelzweig über das siebte 2/2-Wegeventil B.8, den zweiten Kältemittel-Kühlmittel-Wärmetauscher A.10, den dritten Druck-Temperatursensor A.11 und wieder zusammengeführt über den Sammler A.12 zurück zum Kompressor A.1.

Der dritte Kühlmittelkreis 600 ist abgeschaltet.

In einer dritten Ausprägung der fünften Betriebsart kann zusätzlich ein Kühlen des Verbrennungsmotors C.2 erfolgen. Dazu sind die Kühlmittelkreise 100, 200 sowie der Kältemittelkreis 300 analog der zweiten Ausprägung der fünften Betriebsart geschaltet mit dem Unterschied, dass der dritte Kühlmittelkreis 600 ausgehend von der dritten Wasserpumpe C.6 über das fünfte 3/2-Wegeventil D.9, den Verbrennungsmotor C.2, das vierte 3/2-Wegeventil D.8 und schließlich über den Kühler C.7 zurück zur dritten Wasserpumpe C.6 verläuft.

Als Besonderheit ist jeweils in der zweiten Ausprägung und der dritten Ausprägung der fünften Betriebsart die Klappe geschlossen. Der Luftstrom 500 wird also nicht durch den Luft-Wasser-Wärmetauscher C.5 geführt.

Zum Antreiben des Luftstroms 500 kann das Klimagerät 5 ein nicht näher dargestelltes Gebläse aufweisen.

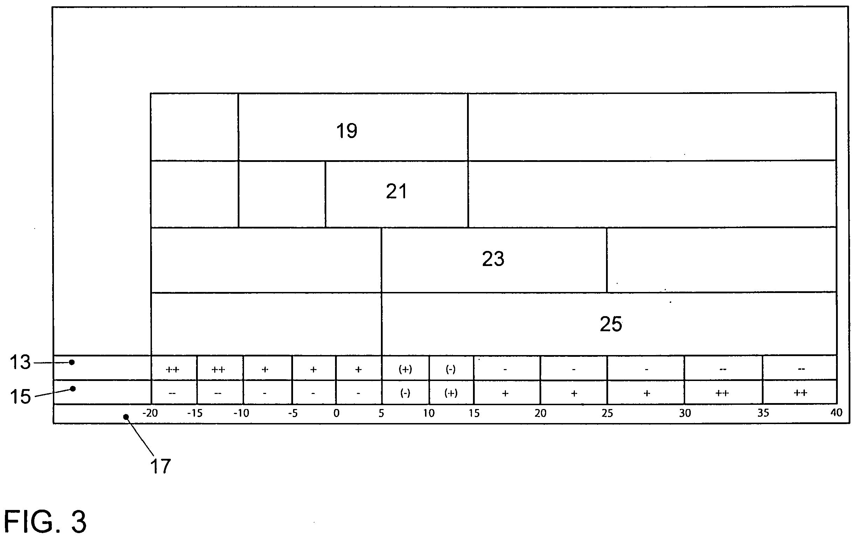

Figur 3 zeigt eine Übersicht der vier verschiedenen Betriebsarten der in Figur 1 gezeigten Klimatisierung 7. In einer ersten Zeile 13 ist mittels Plus- und Minuszeichen angedeutet, dass in der jeweiligen Betriebsart ein starkes Heizen ++, ein mittleres Heizen +, ein optionales Heizen (+), ein optionales Kühlen (-), ein normales Kühlen -, ein starkes Kühlen -- der Batterie C.1 stattfindet. Ebenso codiert ist in einer Zeile 15 das Kühlen der Batterie C.1. In einer dritten Zeile 17 sind Temperaturen in °C der Umgebung des Kraftfahrzeugs 1 eingezeichnet. Die erste Betriebsart ist mit dem Bezugszeichen 19, die zweite Betriebsart mit dem Bezugszeichen 21, die dritte Betriebsart mit dem Bezugszeichen 23 und die vierte Betriebsart mit dem Bezugszeichen 25 gekennzeichnet, wobei diese jeweils in Rechtecken über den Zeilen 13-17 eingezeichnet sind.

Bei der ersten Betriebsart 19 kann ein Umluftbetrieb zwischen 0 und 100 % stattfinden. Der Kältemittelkreis 300 kann in einem Wärmepumpenbetrieb unter Zuhilfenahme des Elektrozuheizers C.2 oder anderer Abwärme-Energiequellen der Elektrotraktion z.B. der Batterie C.1 als Wärmequelle betrieben werden. Dabei kann der Innenraum 3 geheizt werden, optional mit und ohne Kühlen und/oder Heizen der Batterie C.1.

In der zweiten Betriebsart 21 kann der Kältemittelkreis 300 in einem Wärmepumpenbetrieb betrieben werden, wobei der Innenraum 3 beheizt werden kann. Dies kann mit und ohne Heizen und/oder Kühlen der Batterie C.1 erfolgen.

In der dritten Betriebsart 23 kann der Kältemittelkreis 300 in einem Klimaanlagenbetrieb betrieben werden, wahlweise mit und ohne Kühlung der Batterie C.1.

In der vierten Betriebsart 25 kann der Kältemittelkreis 300 in einem Klimaanlagenbetrieb betrieben werden, wahlweise mit und ohne Kühlung der Batterie C.1.

Im Folgenden wird die Beheizung des Innenraums für den Temperaturbereich: ≈ - ...°C...≈ 15 °C an Hand von Figur 1 näher beschrieben.

Der HV-Heizer C.2 gibt Wärme an den Kältemittel-Kühlwasser-Wärmetauscher A.10 ab und leitet diese über die Wasserpumpe C.4 zurück zum HV-Heizer C.2 mit der Option über die Batterie C.1. Das aufgeheizte Kältemittel wird saugseitig dem Kompressor A.1 über dem Sammler A.10 bereitgestellt. Der Kompressor A.1 verdichtet das Kältemittel und fördert es zum Kältemittel-Kühlwasser-Wärmetauscher A.2.

Im Kältemittel-Kühlwasser-Wärmetauscher A.2 wird das Kühlwasser aufgeheizt und mit Hilfe der Wasserpumpe C.3 über den Luft-Wasser-Wärmetauscher C.5 an die den Innenraum durchströmende Luft (500) abgegeben.

Nachdem das Kältemittel auf einem geringfügig niedrigeren Energieniveau aus dem Kältemittel-Kühlwasser-Wärmetauscher A.2 austritt, wird es in das Expansionsventil A.3 gefördert und expandiert dort auf einen niedrigeren Druck. Das expandierte Kältemittel wird über den AC-Verdampfer A.4 zum zweiten Expansionsventil A.6 und dritten Expansionsventil A.9 gefördert.

Am AC-Verdampfer A.4 wird die angesaugte Luft für den Fahrgastraum entfeuchtet und über den Luft-Wasser-Wärmetauscher C.5 wieder aufgeheizt (ReHeat).

Im Expansionsventil A.6 wird das Kältemittel auf eine Temperatur expandiert, die tiefer als die Umgebungstemperatur liegt, damit das Kältemittel Wärme aus der Umgebung aufnehmen kann. Die Aufnahme der Wärme erfolgt über den AC-Kondensator A.7. Nachdem das Kältemittel über den AC-Kondensator Wärme aufgenommen hat, wird das Kältemittel über das Umschaltventil B.6 und den Sammler A.12 zur Saugseite des Kompressors A.1 geleitet.

Im Expansionsventil A.9 wird das Kältemittel auf eine Temperatur expandiert, die tiefer sein muss als die der Eintrittstemperatur des aufgewärmten Kühlwassers z.B. der Batterie C.1, welches über den Kältemittel-Kühlwasser-Wärmetauscher A.10 geführt wird. Das aufgewärmte Kältemittel wird nach Austritt Kältemittel-Kühlwasser-Wärmetauscher A.10 über den Sammler A.12 dem Kompressor A.1 wieder zugeführt.

Im Folgenden wird an Hand der Figur 2 der Betrieb mit ReHeat-Funktion erläutert, wobei ein Temperaturbereich = 5°C...≈...°C vorgesehen ist.

Durch die ReHeat-Funktion wird die zuvor am AC-Verdampfer A.4 abgekühlte Luft durch den Luft-Wasser-Wärmetauscher C.5 wieder aufgeheizt. Der Kompressor A.1 wird angesteuert und fördert das komprimierte Kältemittel an den Kältemittel-Kühlwasser-Wärmetauscher A.2. Dieser wird mit Kühlwasser durchflossen, dabei gibt dieser die Wärme vom Kältemittel an das Kühlwasser ab. Die Wasserpumpe C.3 fördert das aufgeheizte Kühlwasser durch den Luft-Wasser-Wärmetauscher C.5. Der Luft-Wasser-Wärmetauscher C.5 gibt die Wärme des Kühlwassers an die durchströmende Luft für den Innenraum ab. Das abgekühlte Kühlwasser wird über das Umschaltventil D.2 und oder D1 Kältemittel-Kühlwasser-Wärmetauscher A.2 bzw. der Batterie C.1 zur Verfügung gestellt. Der Volumenstrom des Kühlwassers wird mittels elektrischer Ansteuerung der Wasserpumpe C.3 geregelt.

Das Kältemittel wird über das Umschaltventil B.5 zum AC-Kondensator A.7 geleitet, da das elektrische Expansionsventil A.3 komplett geschlossen ist. Nachdem das Kältemittel im AC-Kondensator A.7 verflüssigt wurde, wird dieses am Expansionsventil A.6 expandiert und danach aufgeteilt.

Ein Teil des expandierten Kältemittels durchströmt den AC-Verdampfer A.4 und gibt über diesen seine Kälte an die durchströmende Luft in den Innenraum ab.

Der zweite Teil des Kältemittels expandiert im elektrischen Expansionsventil A.9 und/oder durchströmt das Umschaltventil B.8 zum Kältemittel-Kühlwasser-Wärmetauscher A.10 und gibt seine Kälte an das Kühlwasser der Batterie C.1 ab. Die Bewerkstelligung der Batteriekühlung erfolgt über die Wasserpumpe C.4. Diese gibt den Volumenstrom vor, welcher durch die Batterie C.1 gefördert werden kann.

Die beiden Kältemassenströme werden vor dem Sammler A.10 wieder zusammengeführt und zur Saugseite des Kompressors A.1 geleitet.

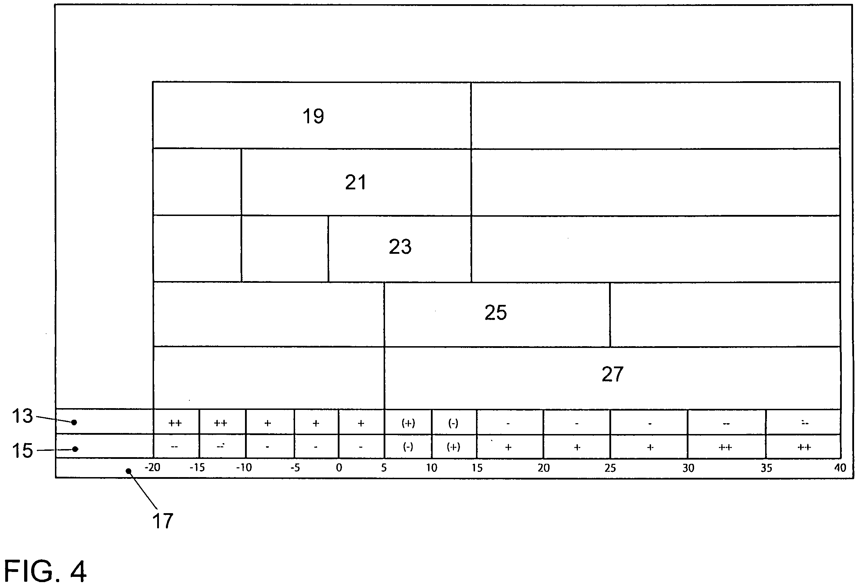

Figur 4 zeigt ein Schaubild analog des Schaubilds 3, jedoch für die in Figur 2 gezeigte Klimatisierung, wobei zusätzlich eine fünfte Betriebsart 27 eingezeichnet ist.

Bei der ersten Betriebsart 19 kann der Verbrennungsmotor C.2 als Wärmequelle angeschaltet sein, womit ein Beheizen des Innenraums 3 erfolgt, wahlweise mit und ohne Beheizen der Batterie C.1.

Bei der zweiten Betriebsart 21 ist ebenfalls der Verbrennungsmotor C.2 angeschaltet, wobei ein Beheizen des Innenraums 3 erfolgt. Außerdem kann der Kältemittelkreis 300 in einem Wärmepumpenbetrieb betrieben werden, wobei ein Nachheizen über den Kältemittel-Kühlwasser-Wärmetauscher A.2 des bereits erwärmten Kühlwassers 100 vom Verbrennungsmotor C.2 und wahlweise eine Kühlung und/oder ein Beheizen der Batterie C.1 erfolgen kann.

In der dritten Betriebsart 23 kann der Kältemittelkreis 300 im Wärmepumpenbetrieb betrieben werden, wobei wahlweise die Batterie C.1 geheizt oder gekühlt werden kann.

In der vierten Betriebsart 25 kann der Kältemittelkreis 300 im Klimaanlagenbetrieb betrieben werden, wobei wahlweise die Batterie C.1 geheizt und gekühlt werden kann.

In der fünften Betriebsart 27 kann der Kältemittelkreis 300 im Klimaanlagenbetrieb betrieben werden, wobei der Innenraum 3 gekühlt werden kann. Dabei kann wahlweise ein Kühlen und/oder Heizen der Batterie C.1 erfolgen, wobei wahlweise der Verbrennungsmotor C.2 angeschaltet ist oder nicht und gegebenenfalls ebenfalls gekühlt werden kann.

Im Folgenden wird unter Bezug auf Figur 2 eine Aufheizung des Fahrgastraumes über den Verbrennungsmotor C.2 bewerkstelligt. Dies erfolgt ohne den Betrieb des Kompressors A.1 in einem Temperaturbereich:≈ ...°C...≈ 15°C.

Der Verbrennungsmotor C.2 gibt Wärme an das Kühlwasser ab und leitet dieses an den Luft-Wasser-Wärmetauscher C.5, wo es an die den Innenraum durchströmende Luft 500 abgegeben wird.

Der Kühlwasser-Kreislauf 100 wird durch den Verbrennungsmotor C.2 erwärmt. Das erwärmte Kühlwasser wird durch die Wasserpumpe C.3 im kleinen Kühlwasser-Kreislauf gefördert. Es wird über das Umschaltventil D.8 und D.7 über den Kältemittel-Kühlwasser-Wärmetauscher A.2, welcher nur einseitig durchströmt wird, und über den Luft-Wasser-Wärmetauscher C.5 geleitet. Am Luft-Wasser-Wärmetauscher C.5 gibt das erwärmte Kühlwasser seine Wärme an die durchströmende Luft 500 ab, welche durch das Gebläse in den Fahrgastraum gedrückt wird. Das durch den Luft-Wasser-Wärmetauscher C.5 abgekühlte Kühlwasser wird durch die Wasserpumpe C.3 über das Umschaltventil D.1, Absperrventil D.9 und Umschaltventil D.2 wieder in den Verbrennungsmotor C.2 gefördert.

Im Folgenden wird unter Bezug auf Figur 2 für den Temperaturbereich: ≈-...°C...≈ 15°C die Wärmepumpenschaltung mit der möglichen Beheizung der Batterie C.1 und des Innenraums bei tiefen Außentemperaturen im Verbrennungsmotor-Modus beschrieben. Des Weiteren kann der Verbrennungsmotor ausgeschaltet und rein elektrisch gefahren werden, wobei die Batterie gekühlt bzw. geheizt werden kann.

Für den Fall tiefer Außentemperaturen muss die Batterie C.1 aufgeheizt werden, damit diese schnell auf Betriebstemperatur gebracht und somit effektiv und vor allem langlebig ihren Dienst verrichten kann. Des Weiteren wird über den Luft-Wasser-Wärmetauscher C.5 Wärme durch die durchströmende Luft 500 aufgenommen und über das Gebläse in den Fahrgastraum gedrückt. Dies kann über eine Temperaturklappe, welche sich vor dem Luft-Wasser-Wärmetauscher C.5 befindet, geregelt bzw. auch über den Volumenstrom des Gebläses eingestellt werden.

Der Kompressor A.1 wird angesteuert und das komprimierte Kältemittel wird zum Kältemittel-Kühlwasser-Wärmetauscher A.2 gefördert. Am Kältemittel-Kühlwasser-Wärmetauscher A.2 gibt das komprimierte und damit heiße Kältemittel einen Teil seiner Wärme an den Kühlwasser-Kreislauf des Verbrennungsmotor C.2 ab. Die Wärmeabgabe erfolgt wie unter Betriebsart 19 beschrieben. Zusätzlich kann mit dieser Betriebsart die Batterie C.1 gekühlt bzw. beheizt werden.

Nachdem das Kältemittel auf einem geringfügig niedrigeren Energieniveau aus dem Kältemittel-Kühlwasser-Wärmetauscher A.2 austritt, wird es in das Expansionsventil A.3 gefördert und expandiert dort auf einen niedrigeren Druck. Das expandierte Kältemittel wird über den AC-Verdampfer A.4 zum zweiten Expansionsventil A.6 und dritten Expansionsventil A.9 gefördert.

Am AC-Verdampfer A.4 wird die angesaugte Luft für den Innenraum entfeuchtet und über den Luft-Wasser-Wärmetauscher C.5 wieder aufgeheizt (ReHeat).

Im Expansionsventil A.6 wird das Kältemittel auf eine Temperatur expandiert, die tiefer als die Umgebungstemperatur liegt, damit das Kältemittel Wärme aus der Umgebung aufnehmen kann. Die Aufnahme der Wärme erfolgt über den AC-Kondensator A.7. Nachdem das Kältemittel über den AC-Kondensator A.7 Wärme aufgenommen hat, wird das Kältemittel über das Absperrventil B.6 und den Sammler A.12 zur Saugseite des Kompressors A.1 geleitet.

Im Expansionsventil A.9 wird das Kältemittel auf eine Temperatur expandiert, die tiefer sein muss als die der Eintrittstemperatur des aufgewärmten Kühlwasser z.B. der Batterie C.2, welches über den Kältemittel-Kühlwasser-Wärmetauscher A.10 geführt wird. Das aufgewärmte Kältemittel wird nach Austritt am Kältemittel-Kühlwasser-Wärmetauscher A.10 über den Sammler A.12 dem Kompressor A.1 wieder zugeführt.

### BEZUGSZEICHENLISTE

- 1: Kraftfahrzeug
- 3: Innenraum
- 5: Klimagerät
- 7: Klimatisierung
- 9: Umgebungsluftstrom
- 11: Klappe
- 13: erste Zeile
- 15: zweite Zeile
- 17: dritte Zeile
- 19: erste Betriebsart
- 21: zweite Betriebsart
- 23: dritte Betriebsart
- 25: vierte Betriebsart
- 27: fünfte Betriebsart
- A.1: Kompressor
- A.2: erster Kältemittel-Kühlmittel-Wärmetauscher
- A.3: erstes elektrisches Expansionsventil
- A.4: Verdampfer
- A.5: erster Druck-Temperatursensor
- A.6: zweites elektrisches Expansionsventil
- A.7: Kondensator
- A.8: zweiter Druck-Temperatursensor
- A.9: drittes elektrisches Expansionsventil
- A.10: zweiter Kältemittel-Kühlmittel-Wärmetauscher
- A.11: dritter Druck-Temperatursensor
- A.12: Sammler
- B.1: erstes 2/2-Wegeventil
- B.2: zweites 2/2-Wegeventil
- B.3: drittes 2/2-Wegeventil
- B.4: Rückschlagventil
- B.5: viertes 2/2-Wegeventil
- B.6: fünftes 2/2-Wegeventil
- B.7: sechstes 2/2-Wegeventil
- B.8: siebtes 2/2-Wegeventil
- C.1: Batterie
- C.2: Elektrozuheizer Verbrennungsmotor
- C.3: erste Wasserpumpe
- C.4: zweite Wasserpumpe
- C.5: Luft-Wasser-Wärmetauscher
- C.6: dritte Wasserpumpe
- C.7: Kühler
- D.1: erstes 3/2-Wegeventil / 2/2-Wegeventil
- D.2: zweites 3/2-Wegeventil / 2/2-Wegeventil
- D.3: drittes 3/2-Wegeventil
- D.4: zweites 3/2-Wegeventil
- D.5: drittes 2/2-Wegeventil
- D.6: viertes 2/2-Wegeventil
- D.7: drittes 3/2-Wegeventil
- D.8: viertes 3/2-Wegeventil
- D.9: fünftes 3/2-Wegeventil
- 100: erster Kühlmittelkreis
- 200: zweiter Kühlmittelkreis
- 300: Kältemittelkreis
- 400: Ventilanordnung
- 500: Luftstrom
- 600: dritter Kühlmittelkreis
- 700: Hochdruckseite
- 800: Niederdruckseite

## Patentansprüche

1. Klimatisierung zum Temperieren von Komponenten und eines Innenraums eines Kraftfahrzeugs, mit
- einer ersten Wasserpumpe (C.3) zum Antreiben eines ersten Kühlmittelkreises (100),
- einer zweiten Wasserpumpe (C.4) zum Antreiben eines zweiten Kühlmittelkreises (200),
- einem Kompressor (A.1) zum Antreiben eines eine Hochdruckseite und eine Niederdruckseite aufweisenden Kältemittelkreises (300),
- einem wasserseitig in den ersten Kühlmittelkreis (100) geschalteten und dem Innenraum luftseitig vorgeschalteten Luft-Wasser-Wärmetauscher (C.5),
- einem kältemittelseitig in den Kältemittelkreis (300) geschalteten und dem Luft-Wasser-Wärmetauscher (C.5) wasserseitig vorgeschalteten ersten Kältemittel-Kühlmittel-Wärmetauscher (A.2)
**dadurch gekennzeichnet, dass** die Klimatisierung einen wasserseitig in den zweiten Kühlmittelkreis (200) und kältemittelseitig in die Niederdruckseite des Kältemittelkreises (300) geschalteten zweiten Kältemittel-Kühlmittel-Wärmetauscher (A.10) aufweist.

2. Klimatisierung nach dem vorhergehenden Anspruch, **dadurch gekennzeichnet, dass** der erste Kältemittel-Kühlmittel-Wärmetauscher (A.2) in die Hochdruckseite des Kältemittelkreises (300) geschaltet ist.

3. Klimatisierung nach einem der vorhergehenden Ansprüche, **dadurch gekennzeichnet, dass** die Klimatisierung eine Ventilanordnung (400) aufweist, mittels der der erste Kältemittel-Kühlmittel-Wärmetauscher (A.2) kältemittelseitig aus dem Kältemittelkreis (300) heraus schaltbar ist.

4. Klimatisierung nach einem der vorhergehenden Ansprüche, **dadurch gekennzeichnet, dass** dem Luft-Wasser-Wärmetauscher (C.5) luftseitig eine Luftklappe zum Steuern eines über den Luft-Wasser-Wärmetauscher (C.5) in den Innenraum strömenden Luftstroms (500) vorgeschaltet ist.

5. Klimatisierung nach einem der Ansprüche 3 bis 4, **dadurch gekennzeichnet, dass** mittels der Ventilanordnung (400) eine Wärmequelle des Kraftfahrzeugs in den ersten Kühlmittelkreis (100) hineinschaltbar und damit dem ersten Kältemittel-Kühlmittel-Wärmetauscher (A.2) vorschaltbar ist.

6. Klimatisierung nach einem der Ansprüche 4 bis 5, **dadurch gekennzeichnet, dass** mittels der Ventilanordnung (400) eine Wärmequelle des Kraftfahrzeugs in den zweiten Kühlmittelkreis (200) hineinschaltbar und damit dem zweiten Kältemittel-Kühlmittel-Wärmetauscher (A.10) vorschaltbar ist.

7. Klimatisierung nach Anspruch 6, **dadurch gekennzeichnet, dass** die Wärmequelle des Kraftfahrzeugs zumindest ein Element der Gruppe: eine Elektrokomponente, eine Elektrotraktionskomponente, eine Leistungselektronik, eine Batterie, ein Verbrennungsmotor und/oder einen Elektrozuheizer aufweist.

8. Klimatisierung nach Anspruch 7, **dadurch gekennzeichnet, dass** die Klimatisierung einen kältemittelseitig in eine Niederdruckseite des Kältemittelkreises (300) geschalteten und dem Luft-Wasser-Wärmetauscher (C.5) luftseitig vorgeschalteten Verdampfer (A.4) aufweist.

9. Klimatisierung nach einem der vorhergehenden Ansprüche 3-8, **dadurch gekennzeichnet, dass** der Kältemittelkreis (300) einen von einem Umgebungsluftstrom durchströmten Kondensator (A.7) aufweist, der mittels der Ventilanordnung (400) wahlweise in die Hochdruckseite oder in die Niederdruckseite des Kältemittelkreises (300) schaltbar ist.

10. Klimatisierung nach einem der vorhergehenden Ansprüche 7-9, **dadurch gekennzeichnet, dass** die Klimatisierung einen von einer dritten Wasserpumpe (C.6) angetriebenen dritten Kühlmittelkreis (600) zum separaten Kühlen des Verbrennungsmotors (C.2) aufweist.

11. Verfahren zum Klimatisieren eines eine Elektrotraktion aufweisenden Kraftfahrzeugs mittels einer Klimatisierung nach einem der vorhergehenden Ansprüche, mit
- Transportieren eines Wärmestroms von dem ersten Kältemittel-Kühlmittel-Wärmetauscher (A.2) in den Luft-Wasser-Wärmetauscher (C.5) in einem Heizbetrieb der Klimatisierung, wobei der Wärmestrom, gesteuert durch die Ventilanordnung, von zumindest einer der folgenden Komponenten des Kraftfahrzeugs stammt: einer Wärmequelle des Kraftfahrzeugs, insbesondere der Elektrokomponente, der Elektrotraktionskomponente, der Leistungselektronik, der Batterie, dem Verbrennungsmotor und/oder der Hochdruckseite des Kältemittelkreises, und
- Transportieren eines Wärmestroms von dem zweiten Kältemittel-Kühlmittel-Wärmetauscher (A.10) auf das saugseitige Druckniveau des Kältemittelkreislaufs (300) in einem Heizbetrieb der Klimatisierung, wobei der Wärmestrom in Abhängigkeit von Einstellungen von Ventilen des Kältemittelkreises und des ersten und zweiten Kühlmittelkreises von zumindest einer der folgenden Komponenten des Kraftfahrzeugs stammt: einer Wärmequelle des Kraftfahrzeugs, insbesondere der Elektrokomponente, der Elektrotraktionskomponente, der Leistungselektronik, der Batterie, dem Verbrennungsmotor und/oder der Niederdruckseite des Kältemittelkreises und
- Transportieren eines Wärmestroms von dem Kondensator (A.7) auf das saugseitige Druckniveau des Kältemittelkreislaufs (300) in einem Heizbetrieb der Klimatisierung, wobei der Wärmestrom, in Abhängigkeit von Einstellungen von Ventilen des Kältemittelkreises und des ersten und zweiten Kühlmittelkreises und einem Umgebungsluftstrom (9), von zumindest einer der folgenden Komponenten des Kraftfahrzeugs stammt: einer Wärmequelle des Kraftfahrzeugs, insbesondere der Elektrokomponente, der Elektrotraktionskomponente, der Leistungselektronik, der Batterie, dem Verbrennungsmotor und/oder der Niederdruckseite des Kältemittelkreises und
- Transportieren eines Kältestroms in einem Komponentenkühlbetrieb von dem zweiten Kältemittel-Kühlmittel-Wärmetauscher (A.10) auf zumindest eine der folgenden Komponenten des Kraftfahrzeugs: eine Wärmequelle des Kraftfahrzeugs, insbesondere die Elektrokomponente, die Elektrotraktionskomponente, die Leistungselektronik, die Batterie, den Verbrennungsmotor und/oder den Elektrozuheizer.

12. Verfahren nach Anspruch 11, mit:
- Transportieren eines Kältestroms in einem Innenraumkühlbetrieb oder einem Innenraum-ReHeatbetrieb von dem Verdampfer (A.4) in den Innenraum des Kraftfahrzeugs.

13. Kraftfahrzeug mit einer Klimatisierung nach einem der vorhergehenden Ansprüche 1 - 10 zum Temperieren von Komponenten und eines Innenraums des Kraftfahrzeugs und/oder ausgelegt, konstruiert, eingerichtet und/oder ausgerüstet mit einer Software zum Durchführen eines Verfahrens nach den Ansprüchen 11 und 12.

## Claims

1. Air conditioning system for controlling the temperature of components and of an interior of a motor vehicle, with
- a first water pump (C.3) for driving a first coolant circuit (100),
- a second water pump (C.4) for driving a second coolant circuit (200),
- a compressor (A.1) for driving a refrigerant circuit (300) having a high-pressure side and a low-pressure side,
- an air-water heat exchanger (C.5) which is connected on the water side into the first coolant circuit (100) and is connected on the air side upstream of the interior,
- a first refrigerant-coolant heat exchanger (A.2) which is connected on the refrigerant side into the refrigerant circuit (300) and is connected on the water side upstream of the air/water heat exchanger (C.5),
**characterized in that** the air conditioning system has a second refrigerant-coolant heat exchanger (A.10) which is connected on the water side into the second coolant circuit (200) and on the refrigerant side into the low-pressure side of the refrigerant circuit (300).

2. Air conditioning system according to the preceding claim, **characterized in that** the first refrigerant-coolant heat exchanger (A.2) is connected into the high-pressure side of the refrigerant circuit (300).

3. Air conditioning system according to either of the preceding claims, **characterized in that** the air conditioning system has a valve arrangement (400) by means of which the first refrigerant-coolant heat exchanger (A.2) can be disconnected on the refrigerant side from the refrigerant circuit (300).

4. Air conditioning system according to one of the preceding claims, **characterized in that** an air flap for controlling an airflow (500) flowing into the interior via the air-water heat exchanger (C.5) is connected on the air side upstream of the air-water heat exchanger (C.5).

5. Air conditioning system according to either of Claims 3 and 4, **characterized in that** a heat source of the motor vehicle can be connected into the first coolant circuit (100) by means of the valve arrangement (400) and can therefore be connected upstream of the first refrigerant-coolant heat exchanger (A.2).

6. Air conditioning system according to either of Claims 4 and 5, **characterized in that** a heat source of the motor vehicle can be connected into the second coolant circuit (200) by means of the valve arrangement (400) and can therefore be connected upstream of the second refrigerant-coolant heat exchanger (A.10).

7. Air conditioning system according to Claim 6, **characterized in that** the heat source of the motor vehicle has at least one component of the group: an electrical component, an electrical traction component, power electronics, a battery, an internal combustion engine and/or an auxiliary electric heater.

8. Air conditioning system according to Claim 7, **characterized in that** the air conditioning system has an evaporator (A.4) which is connected on the refrigerant side into a low-pressure side of the refrigerant circuit (300) and is connected on the air side upstream of the air-water heat exchanger (C.5).

9. Air conditioning system according to one of the preceding Claims 3-8, **characterized in that** the refrigerant circuit (300) has a condenser (A.7) through which an ambient airflow passes and which is connectable by means of the valve arrangement (400) either into the high-pressure side or into the low-pressure side of the refrigerant circuit (300).

10. Air conditioning system according to one of the preceding Claims 7-9, **characterized in that** the air conditioning system has a third coolant circuit (600), which is driven by a third water pump (C.6), for the separate cooling of the internal combustion engine (C.2).

11. Method for the air conditioning of a motor vehicle, which has electric traction, by means of an air conditioning system according to one of the preceding claims, comprising
- transporting a heat flow from the first refrigerant-coolant heat exchanger (A.2) into the air-water heat exchanger (C.5) in a heating mode of the air conditioning system, wherein the heat flow, controlled by the valve arrangement, originates from at least one of the following components of the motor vehicle: a heat source of the motor vehicle, in particular the electrical component, the electrical traction component, the power electronics, the battery, the internal combustion engine and/or the high-pressure side of the refrigerant circuit, and
- transporting a heat flow from the second refrigerant-coolant heat exchanger (A.10) to the suction-side pressure level of the refrigerant circuit (300) in a heating mode of the air conditioning system, wherein, depending on settings of valves of the refrigerant circuit and of the first and second coolant circuit, the heat flow originates from at least one of the following components of the motor vehicle: a heat source of the motor vehicle, in particular of the electrical component, the electrical traction component, the power electronics, the battery, the internal combustion engine and/or the low-pressure side of the refrigerant circuit, and
- transporting a heat flow from the condenser (A.7) onto the suction-side pressure level of the refrigerant circuit (300) in a heating mode of the air conditioning system, wherein, depending on settings of valves of the refrigerant circuit and of the first and second coolant circuit and an ambient airflow (9), the heat flow originates from at least one of the following components of the motor vehicle: a heat source of the motor vehicle, in particular the electrical component, the electrical traction component, the power electronics, the battery, the internal combustion engine and/or the low-pressure side of the refrigerant circuit, and
- transporting a refrigerant flow in a component cooling mode from the second refrigerant-coolant heat exchanger (A.10) onto at least one of the following components of the motor vehicle: a heat source of the motor vehicle, in particular the electrical component, the electrical traction component, the power electronics, the battery, the internal combustion engine and/or the auxiliary electrical heater.

12. Method according to Claim 11, comprising:
- transporting a refrigerant flow in an interior cooling mode or an interior reheating mode from the evaporator (A.4) into the interior of the motor vehicle.

13. Motor vehicle with an air conditioning system according to one of the preceding Claims 1-10 for controlling the temperature of components and of an interior of the motor vehicle and/or designed, constructed, configured and/or equipped with software for carrying out a method according to Claims 11 and 12.

## Revendications

1. Climatisation destinée à thermoréguler des composants et l'espace intérieur d'un véhicule automobile, comportant
- une première pompe à eau (C.3) destinée à entraîner un premier circuit de fluide réfrigérant (100),
- une deuxième pompe à eau (C.4) destinée à entraîner un deuxième circuit de fluide réfrigérant (200),
- un compresseur (A.1) destiné à entraîner un circuit de fluide frigorigène (300) comportant un côté haute pression et un côté basse pression,
- un échangeur de chaleur air-eau (C.5) monté côté eau dans le premier circuit de fluide réfrigérant (100) et monté en amont de l'espace intérieur côté air,
- un premier échangeur de chaleur fluide frigorigène-réfrigérant (A.2) monté côté fluide frigorigène dans le circuit de fluide frigorigène (300) et monté côté eau en amont de l'échangeur de chaleur air-eau (C.5),
**caractérisée en ce que** la climatisation comporte un deuxième échangeur de chaleur fluide frigorigène-réfrigérant (A.10) monté côté eau dans le deuxième circuit de fluide réfrigérant (200) et côté fluide frigorigène dans le côté basse pression du circuit de fluide frigorigène (300).

2. Climatisation selon la revendication précédente, **caractérisée en ce que** le premier échangeur de chaleur fluide frigorigène-réfrigérant (A.2) est monté dans le côté haute pression du circuit de fluide frigorigène (300).

3. Climatisation selon l'une quelconque des revendications précédentes, **caractérisée en ce que** la climatisation comporte un système de vannes (400) au moyen duquel le premier échangeur de chaleur fluide frigorigène-réfrigérant (A.2) peut être déconnecté côté fluide frigorigène du circuit de fluide frigorigène (300).

4. Climatisation selon l'une quelconque des revendications précédentes, **caractérisée en ce qu'**un volet d'aération est monté en amont de l'échangeur de chaleur air-eau (C.5) côté air pour commander un flux d'air (500) s'écoulant dans l'espace intérieur par l'intermédiaire de l'échangeur de chaleur air-eau (C.5).

5. Climatisation selon l'une quelconque des revendications 3 à 4, **caractérisée en ce qu'**une source de chaleur du véhicule automobile peut être mise en circuit dans le premier circuit de fluide réfrigérant (100) au moyen du système de vannes (400) et peut donc ainsi être montée en amont du premier échangeur de chaleur fluide frigorigène-fluide réfrigérant (A.2).

6. Climatisation selon l'une quelconque des revendications 4 à 5, **caractérisée en ce qu'**une source de chaleur du véhicule automobile peut être mise en circuit dans le deuxième circuit de fluide réfrigérant (200) au moyen du système de vannes (400) et peut ainsi être montée en amont du deuxième échangeur de chaleur fluide frigorigène-fluide réfrigérant (A.10).

7. Climatisation selon la revendication 6, **caractérisée en ce que** la source de chaleur du véhicule automobile comporte au moins un élément du groupe comprenant : un composant électrique, un composant de traction électrique, une électronique de puissance, une batterie, un moteur à combustion interne et/ou un dispositif de chauffage électrique.

8. Climatisation selon la revendication 7, **caractérisée en ce que** la climatisation comporte un évaporateur (A.4) monté côté fluide frigorigène dans un côté basse pression du circuit de fluide frigorigène (300) et monté côté air en amont de l'échangeur de chaleur air-eau (C.5).

9. Climatisation selon l'une quelconque des revendications 3 à 8 précédentes, **caractérisée en ce que** le circuit de fluide frigorigène (300) comporte un condenseur (A.7) traversé par un flux d'air ambiant qui peut être mis en circuit de manière sélective au moyen du système de vannes (400) dans le côté haute pression ou dans le côté basse pression du circuit de fluide frigorigène (300).

10. Climatisation selon l'une quelconque des revendications 7 à 9 précédentes, **caractérisée en ce que** la climatisation comporte un troisième circuit de fluide réfrigérant (600) entraîné par une troisième pompe à eau (C.6) pour refroidir séparément le moteur à combustion interne (C.2).

11. Procédé de climatisation d'un véhicule automobile comportant un système de traction électrique au moyen d'une climatisation selon l'une quelconque des revendications précédentes, consistant à
- transporter un flux de chaleur depuis un premier échangeur de chaleur fluide frigorigène-fluide réfrigérant (A.2) vers l'échangeur de chaleur air-eau (C.5) dans un mode de chauffage de la climatisation, dans lequel le flux de chaleur provient, de manière commandée par le système de vannes, d'au moins l'un des composants suivants du véhicule automobile : d'une source de chaleur du véhicule automobile, notamment des composants électriques, des composants de traction électrique, de l'électronique de puissance, de la batterie, du moteur à combustion interne et/ou du côté haute pression du circuit de fluide frigorigène, et
- transporter un flux de chaleur depuis le deuxième échangeur de chaleur fluide frigorigène-fluide réfrigérant (A.10), au niveau de pression côté aspiration de l'étendue du circuit de fluide frigorigène (300), dans un mode de chauffage de la climatisation, dans lequel le flux de chaleur provient d'au moins l'un des composants suivants du véhicule automobile, en fonction de réglages des premier et deuxième circuits de fluide réfrigérant : d'une source de chaleur du véhicule automobile, notamment des composants électriques, des composants de traction électrique, de l'électronique de puissance, de la batterie, du moteur à combustion interne et/ou du côté basse pression du circuit de fluide frigorigène, et
- transporter un flux de chaleur depuis le condenseur (A.7), au niveau de pression du côté aspiration de l'étendue du circuit de fluide frigorigène (300), dans le mode de chauffage de la climatisation, dans lequel le flux de chaleur provient d'au moins l'un des composants suivants, en fonction de réglages de vannes du circuit de fluide frigorigène et des premier et deuxième circuits de fluide réfrigérant et d'un flux d'air ambiant (9) : d'une source de chaleur du véhicule automobile, notamment des composants électriques, des composants de traction électrique, de l'électronique de puissance, de la batterie, du moteur à combustion interne et/ou du côté basse pression du circuit de fluide frigorigène, et
- transporter un flux frigorigène dans un mode de refroidissement des composants depuis le deuxième échangeur de chaleur fluide frigorigène-fluide réfrigérant (A.10) vers au moins l'un des composants suivants du véhicule automobile : une source de chaleur du véhicule automobile, notamment les composants électriques, les composants de traction électrique, l'électronique de puissance, la batterie, le moteur à combustion interne et/ou le dispositif de chauffage électrique.

12. Procédé selon la revendication 11, consistant à
- transporter un flux de refroidissement dans un mode de refroidissement de l'espace intérieur ou dans un mode de réchauffage de l'espace intérieur depuis l'évaporateur (A.4) dans l'espace intérieur du véhicule automobile.

13. Véhicule automobile comportant une climatisation selon l'une quelconque des revendications 1 à 10 précédentes pour thermoréguler des composants et un espace intérieur du véhicule automobile et/ou configuré, réalisé, conçu et/ou équipé d'un logiciel pour mettre en oeuvre un procédé selon les revendications 11 et 12.
